# EUROPEAN PATENT APPLICATION

(11) **EP 2 066 135 A1**
(43) Date of publication of application: **03.06.2009**
(21) Application number: 06840702.2
(22) Date of filing: 29.12.2006
(51) Int. Cl.: H04Q 7/28

(54) **GROUP HIGH SPEED DATA TRANSMISSION METHOD FOR CDMA2000 GROUP COMMUNICATION SYSTEM**

(30) Priority: 11.09.2006 CN 200610152077
(71) Applicant: ZTE Corporation, Shenzhen, Guangdong 518057 (CN)
(72) Inventor: PAN, Xueming, Guangdong 518057 (CN); LI, Yongfei, Guangdong 518057 (CN)
(74) Representative: Molnia, David
(86) International application number: PCT/CN2006/003672
(87) International publication number: WO 2008/031294

(57) **Abstract**

The present invention discloses a method for transmitting group high speed data for a CDMA 2000 trunking communication system, wherein a calling terminal transmits a group data calling request to a base station; in response to the group data calling request, the base station assigns an uplink high speed supplement channel to the calling terminal, and establishes and holds data communication connection between the calling terminal and a packet data service node; the base station assigns a shared downlink high speed supplement channel for target terminals in the group according to the group data calling request, and establishes and holds data communication connection between the target terminals and the packet data service node; the calling terminal transmits data through the uplink high speed supplement channel to the packet data service node via the base station, and a trunking server processes the data and transmits the processed data to the target terminals by the packet data service node. The present invention enables the CDMA 2000 trunking communication system to support a group high speed data service and also support concurrency of PTT voice and a trunking data service.

## Description

### Technical Field

The present invention relates to a mobile communication system and a trunking communication system specifically relating to a method for transmitting group high speed data for a CDMA 2000 trunking communication system.

### Background of the Art

A trunking communication system is a dedicated mobile communication system, in which a plurality of users share one group of wireless channels. These channels are dynamically used by these users. Being a commanding and dispatching communication system, the trunking communication system has been widely used in sectors such as enterprises, public institutions, industries such as mining, oil fields, farms, public security, police and armies, and such sectors have relatively stricter requirements on commanding and dispatching functions in countries having developed social economy, industry and agriculture.

The main feature of the CDMA 2000 (Code Division Multiple Access 2000) trunking communication system lies in using a half-duplex communication manner which can achieve a quick connection and the support of a group call (i.e. a single to multiple call). The CDMA 2000 trunking communication system requires that users in the group share a downlink channel (also called a forward channel) in the same cell after users of the group make a call. Users can talk to others by pressing the PPT (Push To Talk) button. Widely used in a talk-back system and a trunking system, the PPT service provides commanding and dispatching usages for many sectors such as civil servants serving in the police, fire or military and private sectors such as workers at a construction site, factories, airports, large assembly, and military dispatching.

With social progress and the increase of personnel mobility accompanied by rapid development of mobile communication technologies, the personal communication market is growing rapidly. Trunking service is slowly making an entrance into the personal communication sector, such as chat among modem young people or within a team, and communication within family members. Offering a wide expansion of value-added services the CDMA 2000 trunking communication system with the functions of group call and group message sending has become a new mobile value-added application.

Technology of CDMA 2000 has a broadband spread spectrum air interface, in which widely adopts a reverse pilot technology, a highly effective air encoding mode, a diversity reception technology and a quick power control technology so that the interference to other users is decreased while modulation and demodulation gain of channels is increased. This leads to a significant increase in the rate of the system spectrum utilization and guarantees that the number of original voice users is not decreased while multiple high speed data users are supported. Additionally, soft handoff technology can guarantee a more stable transmission of data service. The combination of CDMA 2000 technology along with the trunking system can not only exert the technical advantages of the CDMA 2000 system but can also realize trunking service functions such as group call of users.

The CDMA 2000 system has strong functionality as data service: Release 0 protocol version supports a high speed packet data service transmission at a rate of 153.6kbps; Release A version supports a higher speed packet data service transmission at a rate of 307.2kbps. Release A also supports concurrent transmission of voice and data service.

However, the existing CDMA 2000 trunking communication system only supports group calls of basic voice (i.e. traditional PTT voice function) and can not perform single to multiple high speed data transmission within a group, which does not fully exert the characteristics of CDMA 2000 in the data service. With the development of terminal technologies, a CDMA 2000 terminal integrating functions such as a high definition camera, audio and video playing ability, video telephone, FTP uploading/downloading has occurred and gradually become popular. Meanwhile, operators have also begun to provide various data value-added services. The combination of these applications of data services with the single to multiple call characteristics of the trunking communication system which becomes a new value-added service for trunking service operators, can support applications such as group video teleconferencing, document distribution in a group, broadcasting of streaming media within a group, and meet the needs of many situations.

A solution for transmitting group high speed data is needed to realize high speed data transmission in a trunking communication system.

### Summary of the Invention

The main object of the present invention is to provide a method and a system for transmitting group high speed data for a CDMA 2000 trunking communication system to realize group high speed data services in the CDMA 2000 trunking communication system.

To realize the above object, the present invention provides a method for transmitting group high speed data for a CDMA 2000 trunking communication system. The method for transmitting group high speed data comprises the following steps:
Step 102, a calling terminal transmits a group data calling request to a base station;
Step 104, in response to the group data calling request, the base station assigns an uplink high speed supplement channel to the calling terminal. Then the base station establishes and holds data communication connection between the calling terminal and a packet data service node;
Step S106, the base station assigns a shared downlink high speed supplement channel (also called forward high speed supplement channel) for target terminals in the group according to the group data calling request, and establishes and holds data communication connection between the target terminals and the packet data service node; and
Step S108, the calling terminal transmits data through the uplink high speed supplement channel to the packet data service node via the base station , and a trunking server processes the data and transmits the processed data to the target terminals by the packet data service node.

Alternatively, in step S106, before the base station assigns the downlink high speed supplement channel and establishes the data communication connection, the trunking server initiates paging to all target terminals in the group through the base station. Then the base station assigns the downlink high speed supplement channel and establishes the data communication connection for the target terminals that respond to the page.

Alternatively, in step S108, the process performed to the data by the trunking server comprises caching the data in real time and adding information of the target terminals to the data.

Alternatively, in step S104, before the base station assigns the uplink high speed supplement channel and establishes the data communication connection, the trunking server authenticates the information of the group data calling request. And the base station assigns the uplink high speed supplement channel and establishes the data communication connection for the calling terminal in the case that the authentication is successful..

Alternatively, in step S106, before the base station assigns the downlink high speed supplement channel and establishes the data communication connection for the target terminals that respond to the page, the trunking server authenticates the target terminals that respond to the page, and the base station assigns the downlink high speed supplement channel and establishes the data communication connection for the target terminals succeeded in the authentication.

Preferably, in the process of transmitting the group high speed data, any terminal in the group is allowed to initiate group voice call, and the base station transmits voice by establishing a shared downlink voice channel (also called forward voice channel) for voice target terminals.

Preferably, the rate of the downlink high speed supplement channel is the same as that of the uplink high speed supplement channel.

Preferably, the same Walsh code is used for all terminals in the same group to establish the downlink high speed supplement channel, and downlink high speed supplement channels of different groups are distinguished by different Walsh codes.

Preferably, in the process of transmitting group high speed data, switch of sending/receiving is allowed, one terminal in the original target terminal is switched to be a new calling terminal and a original calling terminal is switched to be a target terminal, wherein the base station reassigns the uplink high speed supplement channel to the new calling terminal and reassigns the downlink high speed supplement channel to the original calling terminal.

The above data communication connection includes, but is not limited to PPP (Point-to-Point protocol) connection.

According to the present invention, by means of the above technical solution, when a mobile terminal initiates a group data service call, the data uploaded by the user is sent to PDSN (Packet Data Service Node) by a base station, and then copied and sent to a trunking server by the PDSN. The trunking server initiates a group data service call to users within the group according to the target group of the group call and then distributes the data to the users within the group by the PDSN so that a high speed data transmission passage is established between the calling user and all the called users within the group, and the users can carry all kinds of applications at the passage.

### Brief Description of the Accompanying Drawings

The figures to be explained here are used to provide further understandings of the present invention and constitute a part of the present application. Illustrative embodiments and explanations thereof are used to explain but not to restrict the present invention. In the figures:
Figure 1 is a flow chart of the method for transmitting group high speed data for a CDMA 2000 trunking communication system according to the present invention;
Figure 2 is a block diagram of the CDMA 2000 system for transmitting group high speed data according to the present invention;
Figure 3 is a structural diagram of the network of the CDMA 2000 trunking data service according to the embodiments of the present invention; and
Figure 4 is a flow chart of the group high speed data service according to the embodiments of the present invention.

### Embodiments for Carrying Out This Invention

The present invention will be described in details in combination with the accompanying drawings.

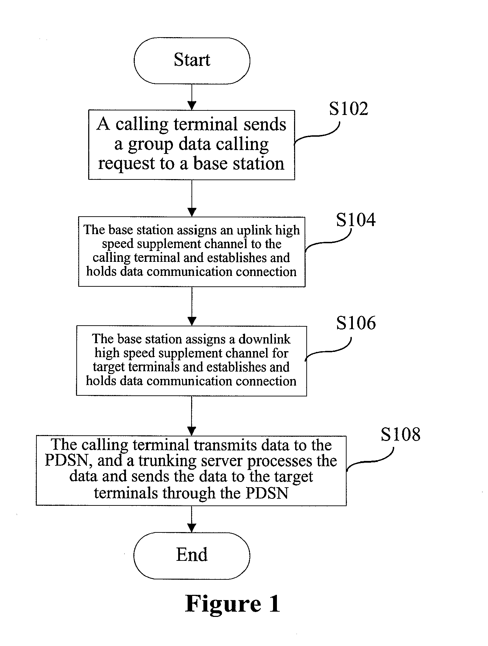

Referring to figure 1, the method for transmitting group high speed data for a CDMA 2000 trunking communication system according to the present invention comprises the following steps:
Step S102, a calling terminal sends a group data calling request to a base station.
Step S104, in response to the group data calling request, the base station assigns an uplink high speed supplement channel to the calling terminal, and establishes and holds data communication connection (which can be PPP connection) between the calling terminal and packet data service node.

Before the base station assigns the uplink high speed supplement channel and establishes the data communication connection, a trunking server must authenticate information of the group data calling request. If the authentication is successful, the base station assigns the uplink high speed supplement channel for the calling terminal and establishes the data communication connection.

Step S106, the base station assigns a shared downlink high speed supplement channel for target terminals of the group according to the group data calling request, and establishes and holds data communication connection (which can be PPP connection) between the target terminals and the packet data service node.

The rate of the downlink high speed supplement channel can be set to be the same as that of the uplink high speed supplement channel. Moreover, the same Walsh code is used for all terminals in the same group to establish the downlink high speed supplement channel, and downlink high speed supplement channels of different groups are distinguished by different Walsh codes.

Before the base station assigns the downlink high speed supplement channel and establishes the data communication connection, a trunking server can initiate paging to all target terminals in the group through the base station, and the base station assigns the downlink high speed supplement channel for the target terminals that responded to the page and establishes the data communication connection.

Before the base station assigns a downlink high speed supplement channel for the target terminals that responded to the page and establishes data communication connection, the trunking server can authenticate the target terminals that responded to the page, and the base station assigns a downlink high speed supplement channel and establishes data communication connection for the target terminals which succeeded in the authentication.

Step S108, the calling terminal transmits data through the uplink high speed supplement channel to the packet data service node via the base station, and the trunking server processes the data and transmits the processed data to the target terminals by the packet data service node.

After the calling terminal uploads the data to the packet data service node, the trunking server can process the data by caching the data in real time and adding information of the target terminals to the data.

Additionally, in the process of transmitting the group high speed data, any terminal in the group is allowed to initiate a group voice call, and the base station transmits voice by establishing a shared downlink voice channel for voice target terminals.

Generally, in the process of transmitting the group high speed data, switch of sending/receiving is allowed, one terminal of the original target terminals is switched to be a new calling terminal and the original calling terminal is switched to be a target terminal, wherein the base station reassigns an uplink high speed supplement channel to the new calling terminal and reassigns a downlink high speed supplement channel to the original calling terminal.

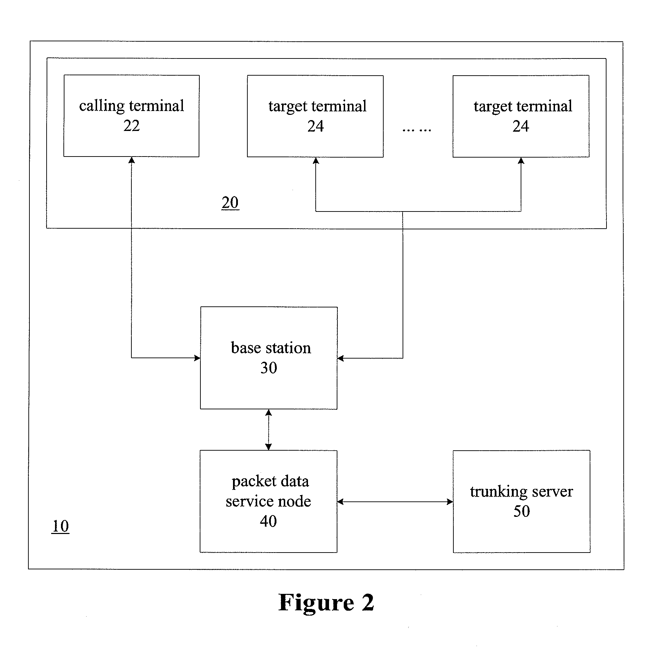

Referring to figure 2, the system 10 using the method for transmitting group high speed data according to the present invention comprises: a trunking communication terminal 20 including a calling terminal 22 for transmitting a group data calling request and data and target terminals 24 for receiving data; a base station 30 for assigning an uplink high speed supplement channel for the calling terminal 22 and establishing and holding data communication connection between the calling terminal 22 and a packet data service node 40, and for assigning a shared downlink high speed supplement channel for the target terminals 24 and establishing and holding data communication connection between the target terminals 24 and the packet data service node 40; and a packet data service node 40 for receiving data that the calling terminal 22 transmits through the base station 30 via the uplink high speed supplement channel and for sending data through the base station 30 to the target terminals 24 via the downlink high speed supplement channel.

The group high speed data transmitting system 10 can also comprise of a trunking server 50 for initiating a page to the all target terminals 24 in the group through the base station 30 before the base station 30 assigns the downlink high speed supplement channel and establishes data communication connection between the target terminals 24 and the packet data service node 40. The base station 30 assigns the downlink high speed supplement channel for target terminals 24 that responded to the call and establishes the data communication connection. Additionally, the trunking server 50 can also be used to authenticate the target terminals 24 that responded to the call before the base station 30 assigns the downlink high speed supplement channel for the target terminals 24 that responded to the call and establishes data communication connection between the target terminals 24 and the packet data service node 40. The base station 30 assigns the downlink high speed supplement channel for the target terminals 24 which succeeded in the authentication and establishes the data communication connection.

The trunking server 50 can also be used to process data and send the processed data to the target terminals 24 through the packet data service node 40 after the calling terminal 22 uploads the data to the packet data service node 40.

The trunking server 50 can also be used to authenticate information of the group data calling request before the base station 30 assigns the uplink high speed supplement channel and establishes the data communication connection between the calling terminal 22 and the packet data service node 40. If the authentication is successful, the base station 30 assigns the uplink high speed supplement channel for the calling terminal 22 and establishes the data communication connection.

The present invention relates to the 3^{rd} Generation cellular mobile communication system and the trunking communication system, and particularly, to a method for realizing a group high speed data service in CDMA 2000 digital trunking communication system.

The object of the present invention is to provide an easily implementable method for realizing the group high speed data service based on the existing CDMA 2000 trunking system and realizing concurrency of the group data service and PTT voice (based on CDMA 2000 Release A protocol version) to solve the problem that only a PTT voice call can be made while group high speed data transmission is impossible in the existing CDMA 2000 trunking communication system. A series of applications of high speed data transmission having single-to-multiple characteristics within a group become possible by using the method for the present invention.

To achieve the above object, the method for realizing group high speed data service in the CDMA 2000 trunking communication system according to the present invention comprises the following contents: when a mobile terminal initiates a group data service call, data uploaded by the user (the mobile terminal) is sent to PDSN through a base station and copied to a trunking server by the PDSN. The trunking server initiates a group data service call to users within the group according to the target group of the group call and distributes the data to users within the group through the PDSN.

This method comprises the following steps:
(1) A PTT terminal based on CDMA 2000 initiates a group data calling request.
(2) A Base station establishes a high speed uplink supplement channel for this user, and establishes PPP connection (i.e. data communication connection) between the user and PDSN and holds the connection.
(3) A trunking server initiates a page to users within a group through the base station according to the target group of the group call.
(4) After the response of the users within the group, the base station assigns a shared downlink high speed supplement channel for these users and establishes PPP connection between each user and the PDSN.
(5) A calling user begins to upload data data packet and the trunking server caches the data packet uploaded to the PDSN in real time and adds user information of the target group.
(6) The trunking server sends the cached and processed data packet to the base station through the PDSN, and the base station sends the data to each user within the group through the group shared downlink high speed supplement channel.

In this way, a high speed data transmission passage is established between the calling user and all called users within the group, and users can utilize various applications through this passage.

The present invention further comprises the following contents: in the process of the group data call, any user within the group can initiate a voice call of the group (i.e. traditional PTT voice service). The manner for realizing the voice call is similar to that of the traditional PTT service based on CDMA 2000, in which the base station only needs to establish a shared downlink service channel (also called forward service channel) for users within the group again to transmit a user voice frame. Likewise, in the process of a PTT voice call, any terminal within the group can also initiate a group data call. The group data call and the PTT voice call do not affect each other, which can realize concurrency of a PTT voice service and a group data service.

Compared with a voice service, the high speed data service needs to occupy more base station resources and use greater transmission power, and factors such as CE resources, Walsh code and transmission power of the base station will be chief factors restricting sector capacity. Therefore, the key of realizing the group data service is to refer to the thought of sharing channels in the existing PTT voice service, in which users of the same group in the same sector share one downlink high speed supplement channel. In this way, CE resources and transmission power of the base station can be greatly saved, which makes the realizing of the group data service possible.

Wherein, the method for realizing the shared high speed supplement channel is as follows: a base station assigns a high rate downlink supplement channel, whose rate, wireless configuration, etc. can be the same as those of the uplink supplement channel (also called reverse supplement channel) established between a calling user and the base station for users of the same group. (e.g. if the calling user and the base station, after negotiation, adopt backward supplement by 8x rate to conduct uploading, a downlink shared supplement channel that the base station assigns for the same group users also has a rate of 8x.) All terminals within the group use the same Walsh code and frame offset to establish a downlink high speed supplement channel, and downlink shared supplement channels of different groups are distinguished by Walsh code. The Walsh code is scrambled by a special long code mask which is created through encryption algorithm by group ID.

Similar to the PTT voice service, the group high speed data service can also switch floor. For the group data service, switching floor means switching user's status of receiving/sending data. Hence, to switch the user's status from receiving data (equal to a listening user of PTT voice) to sending data to the group (equal to a speaking user of PTT voice), the base station only needs to reassign the uplink supplement channel for the user to upload data. Meanwhile, the base station assigns the downlink high speed supplement channel shared by the group to the user who was in the status of sending data to the group, so that the user receives data through this channel.

Additionally, to realize the function of the group data service, a packet data service node (PDSN) needs to be added in the existing CDMA 2000 trunking communication system, which provides an access function of a CDMA 2000 packet-based network for a trunking terminal.

By making small changes, the method for the present invention can, allow the existing CDMA 2000 trunking communication system to support group high speed data service, and solve the problem of the existing system only supporting the PTT voice call. This method also supports concurrent use of the PTT voice and group data service. Thus, this method better satisfies individual needs of various users and is expected to become a new point of profit growth for trunking service operators.

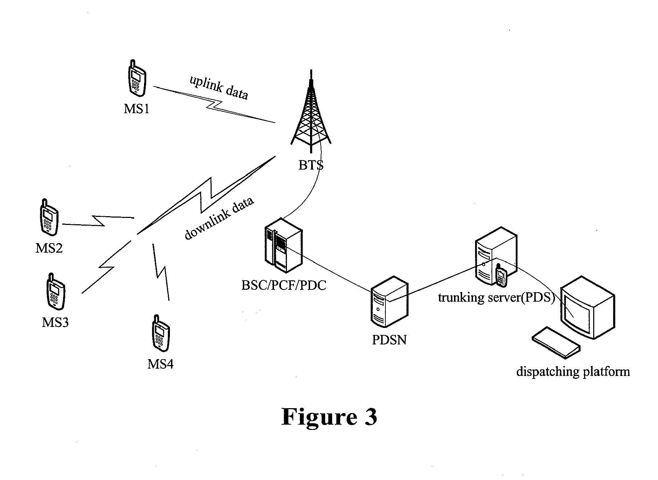

The method for the present invention is realized in the existing CDMA 2000 trunking communication system, and the system (as shown in figure 3) comprises of at least a base station transceiver, a base station controller, a trunking server, a dispatching platform and a CDMA 2000 trunking communication terminal. Additionally, as shown in figure 3, the system also comprises a packet data service node (PDSN) which is connected with the trunking server through high speed Ethernet.

The trunking server realizes process of a calling function and controls dispatching of the assignment of the calling service. The dispatching platform serves as an operation and maintenance center, controls and monitors the trunking server, and realizes dispatching a mobile station.

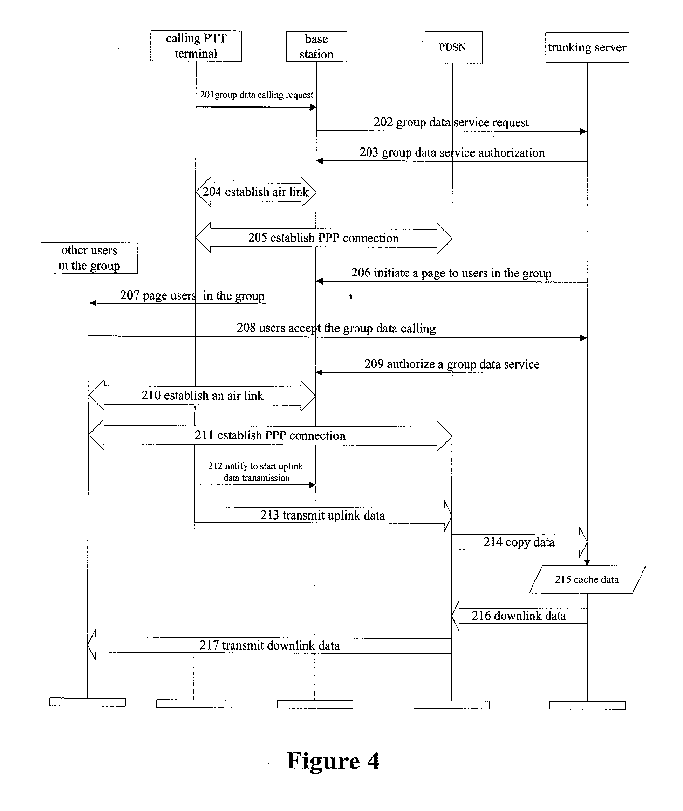

The method for carrying out the present invention will be described in details in combination with figure 4 hereinafter. The present invention can be carried out according to the flow chart shown in figure 4 as follows:
Step 201, a PTT terminal based on CDMA 2000 initiates a group data calling request to a base station.
Step 202, the CDMA 2000 base station receives the group data calling request, sends the information of the calling user, the group information and the service type that is applied for etc. to the trunking server, and then applies for a group data service to the trunking server.
Step 203, the trunking server authenticates the user, the group information and the service type, judges whether the user and the group can initiate a group data call and informs the base station of the authentication result. The authentication here can be separated from PTT voice authentication, as the group data service is a new type of service.
Step 204, if the user is entitled to initiate a group data call, the base station assigns air resources for the user, i.e. establishing a high speed uplink supplement channel as a physical channel for transmitting the user's uplink data. The rate of the established uplink high speed supplement channel is applied for by the calling user and is assigned by the base station according to the occupation situation of current channel resources.
Step 205, the base station sets up PPP connection between the user and the PDSN at the same time and holds the connection for data transmission between terminals and the PDSN.
Step 206, the trunking server initiates paging all users within the group through the base station according to the group information brought by the calling terminal.
Step 207, the base station sends the paging information to all users belonging to the group to inform them of the existence of the group data call.
Step 208, the users choose whether to accept the group data call and send their responses to the base station through paging response information, and the base station sends the paging responses from all group users to the trunking server.
Step 209, the trunking server authenticates the users that responded to the group data service call and informs the base station of the authentication results.
Step 210, the base station assigns a shared high speed downlink supplement channel, through which the base station sends data to all users in the group, to all authorized group users in the cell.
Step 211, the base station establishes and holds PPP connection between all authorized group users in the cell and the PDSN at the same time.
Step 212, after establishing a downlink shared channel, the base station informs the users initiating the group data call of starting transmitting uplink data.
Step S213, the calling terminal sends data to the base station through the uplink high speed supplement channel and the base station sends the data to the PDSN after receiving it.
Steps S214 and S215, the trunking server copies the data sent to the PDSN in real time and caches it.
Step S216, the trunking server adds target user information to the cached data and sends them to the PDSN.
Step S217, the PDSN sends the data to a corresponding base station, and the corresponding base station sends the data to all users in the group through the established downlink high speed supplement channel shared in the group.

Then, a high speed data transmission passage is established between the calling user and all called users, and the users can utilize all kinds of applications at this passage.

The descriptions above are only preferable embodiments of the present invention and shall not be understood as restrictions on the present invention. For those skilled in the art, the present invention may have various changes and variations. Any modifications, equivalent substitutions, improvements, etc. within the spirit and principle of the present invention shall all be included in the scope of protection of the present invention.

## Claims

1. A method for transmitting group high speed data for a CDMA 2000 trunking communication system, **characterized in**, comprising the following steps:
Step 102, a calling terminal transmits a group data calling request to a base station;
Step 104, in response to the group data calling request, the base station assigns an uplink high speed supplement channel to the calling terminal and establishes and holds data communication connection between the calling terminal and a packet data service node;
Step 106, the base station assigns a shared downlink high speed supplement channel for target terminals in the group according to the group data calling request, and establishes and holds data communication connection between the target terminals and the packet data service node; and
Step 108, the calling terminal transmits data through the uplink high speed supplement channel to the packet data service node via the base station, and a trunking server processes the data and transmits the processed data to the target terminals through the packet data service node.

2. The method for transmitting group high speed data according to claim 1, **characterized in that**, in step 106, before the base station assigns the downlink high speed supplement channel and establishes the data communication connection, the trunking server initiates a page to all the target terminals in the group through the base station, and the base station assigns the downlink high speed supplement channel and establishes the data communication connection for the target terminals that responded to the page.

3. The method for transmitting group high speed data transmission according to claim 1, **characterized in that**, in step 108, the process performed to the data by the trunking server comprises caching the data in real time and adding information of the target terminals to the data.

4. The method for transmitting group high speed data according to claim 1, **characterized in that**, in step 104, before the base station assigns the uplink high speed supplement channel and establishes the data communication connection, the trunking server authenticates the information of the group data calling request, and the base station assigns the uplink high speed supplement channel and establishes the data communication connection for the calling terminal in the case that the authentication is successful.

5. The method for transmitting group high speed data according to claim 2, **characterized in that**, in step 106, before the base station assigns the downlink high speed supplement channel and establishes the data communication connection for the target terminals that responded to the page, the trunking server authenticates the target terminals that responded to the page, and the base station assigns the downlink high speed supplement channel and establishes the data communication connection for the target terminals which succeeded in the authentication.

6. The method for transmitting group high speed data according to any of claims 1 to 5, **characterized in that**, in the process of transmitting the group high speed data, any terminal in the group is allowed to initiate group voice call, and the base station transmits voice by establishing a shared downlink voice channel for voice target terminals.

7. The method for transmitting group high speed data according to any of claims 1 to 5, **characterized in that**, the rate of the downlink high speed supplement channel is the same as that of the uplink high speed supplement channel.

8. The method for transmitting group high speed data according to any of claims 1 to 5, **characterized in that**, the same Walsh code is used for all terminals in the same group to establish the downlink high speed supplement channel, and downlink high speed supplement channels of different groups are distinguished by different Walsh codes.

9. The method for transmitting group high speed data according to any of claims 1 to 5, **characterized in that**, in the process of transmitting the group high speed data, switch of sending/receiving is allowed, one terminal in original target terminals is switched to be a new calling terminal and a original calling terminal is switched to be a target terminal, wherein the base station reassigns the uplink high speed supplement channel to the new calling terminal and reassigns the downlink high speed supplement channel to the original calling terminal.

10. The method for transmitting group high speed data according to any of claims 1 to 5, **characterized in that**, the data communication connection includes Point-to-Point protocol connection.
